# EUROPEAN PATENT APPLICATION

(11) **EP 1 903 467 A2**
(43) Date of publication of application: **26.03.2008**
(21) Application number: 07117042.7
(22) Date of filing: 24.09.2007
(51) Int. Cl.: G06F 21/00

(54) **Method, apparatus, and system for transmitting and receiving inter-device content right objects**

(30) Priority: 22.09.2006 KR 20060092438
(71) Applicant: Samsung Electronics Co., Ltd., Suwon-si, Gyeonggi-Do (KR)
(72) Inventor: Lee, Byung-Rae, Gyeonggi-do (KR); Lee, Kook-Heui, Gyeonggi-do (KR)
(74) Representative: Grünecker, Kinkeldey, Stockmair & Schwanhäusser Anwaltssozietät

(57) **Abstract**

An apparatus, system and method for giving and taking an RO for a content between devices are provided. The provided method includes both a method for directly giving and taking the RO between devices and a method for giving and taking the RO through a network server. Accordingly, the apparatus, system and method provide the capability of giving and taking an RO between respective devices and improve the ability expand functions.

## Description

### BACKGROUND OF THE INVENTION

### 1. Field of the Invention:

The present invention relates to a method, an apparatus and a system for managing a Digital Rights Management environment. More particularly, the present invention relates to a method, an apparatus, and a system for giving and taking a Rights Object (RO) for a content in an environment to which a Digital Rights Management (hereinafter, referred to as DRM) is applied.

### 2. Description of the Related Art:

Content services have been gradually expanding to include charged services. When providing charged services, a content provider has provided content services based on initial copy protection technology. More recently however, a DRM technology based on the flexibility and convenience for user's RO has been introduced.

Such DRM technology basically permits free distribution of encrypted content among users. However, a user is not allowed to execute the content until the user purchases an RO which contains information including authority to use the content. Such DRM technology, which is a representative security technique for content protection, defines an encrypted content and an authority to use the content. In one implementation, a domain for content sharing is created by grouping devices that intend to share their contents with each other on a network having one identical service provider. So configured, such a group can share an encryption key corresponding to the domain thereof and a member belonging to the domain is determined based on the shared encryption key. To this end, the service provider mainly manages registration or secession of terminals to or from the domain.

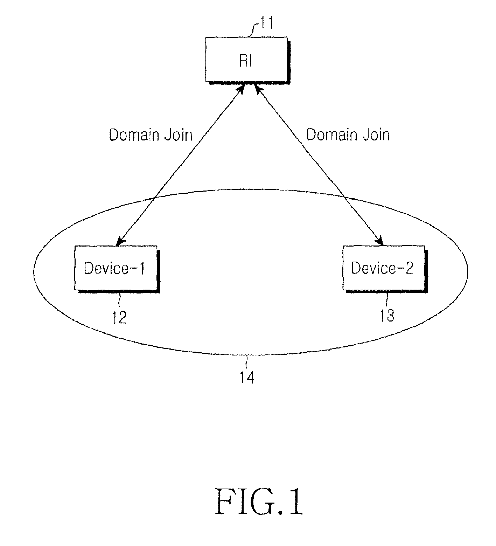

A domain defined in OMA DRM v2.0 is used as a conventional construction for sharing contents among devices. Such a conventional DRM system is shown in FIG. 1. Hereinafter, a domain structure and a procedure of sharing contents based on common OMA DRM v2.0 will be described. As shown in FIG. 1, a plurality of devices 12 and 13 belong to one domain 14, and a Rights Issuer (RI) 11 transmits a content and an RO for the content to the devices 12 and 13. Entities playing a major role in an environment to which a DRM is applied include devices 12 and 13 for reproducing the content by using the RO, and the RI 11 (i.e. a service provider) for generating and issuing a usage RO for the content. Such devices 12 and 13 are registered in a specific domain through communication with the RI 11. The devices 12 and 13, having been registered in the domain, acquire a domain key and decrypt a domain RO through the acquired domain key, thereby using the content.

### SUMMARY OF THE INVENTION

As described above, in order to protect distributed contents, an authentication procedure is performed between a service provider and a terminal. Conventional related standards of such content protection methods include an OMA DRM v2.0. However, there has never been a detailed disclosed method with respect to a rights movement, or related standard technologies, between respective devices in an environment to which a DRM is applied. Therefore, it is not possible to apply a rule capable of giving and taking an RO between respective devices to a structure of the current standard. This causes a structural problem and thus may be a barrier to function expansion.

An aspect of the present invention is to address at least the above-mentioned problems and/or disadvantages and to provide at least the advantages described below. Accordingly, an aspect of the present invention is to provide a method, an apparatus, and a system for giving and taking an RO for a content between devices.

In accordance with another aspect of the present invention, a method for transmitting and receiving a Rights Object (RO) for a content between one or more devices is provided. The method includes transmitting to at least one second device by a first device of the devices, a content list for a right to be transmitted, receiving an identifier for a content designated according to user's input from the second device, transmitting, by the first device, information of the right for the designated content based on the received identifier and, when the second device makes a request for a right as much as the second device wants to receive, transmitting, by the first device, the right as much as the second device wants to receive.

In accordance with another aspect of the present invention, a method for transmitting and receiving an RO for a content between devices in a system including one or more devices and a Rights Issuer (RI) is provided. The method includes transmitting to the RI by a first device of the devices, information of a right to be transmitted, transmitting to the second device by the RI, a message asking if the second device will receive the information of the right and transmitting the information of the right to the second device by the RI when receiving an approval message with respect to transmission of the asking message.

In accordance with another aspect of the present invention, a method for transmitting and receiving an RO for a content between devices in a system including one or more devices and an RI is provided. The method includes transmitting to the RI by a first device of the devices, information of a right to be transmitted, transmitting to the second device by the RI, a message requiring start of a process of acquiring the information of the right from the first device and bringing, by the second device, the right from the RI when receiving the message.

In accordance with another aspect of the present invention, a method for transmitting and receiving an RO for a content between devices in a system including one or more devices and an RI is provided. The method includes transmitting to the RI by a first device of the devices, information of a right to be transmitted, transmitting to the second device by the first device, the information of the right to be transmitted, when receiving a confirmation message from the RI and transmitting, by the RI, the right to the second device, when an approval message is received from the second device.

In accordance with another aspect of the present invention, a system for transmitting and receiving an RO for a content between devices is provided. The system includes a first device for transmitting information of a right to be transmitted, to an RI, the RI for transmitting a message, asking if a second device will receive the information of the right, to the second device when receiving the information of the right, and transmitting the information of the right to the second device when receiving an approval message from the second device and the second device for transmitting a response message, indicating approval or disapproval, to the RI when receiving the message, asking if the second device will receive the information of the right, from the RI, and receiving the right from the RI when transmitting an approval message indicating the reception of the information of the right.

In accordance with another aspect of the present invention, an apparatus for transmitting and receiving an RO for a content is provided. The apparatus includes a move management module for transmitting a content list for a right to be transmitted to another device, transmitting information of the right for a corresponding content to said another device when an identifier for the content designated by said another device is received, and transmitting a right as much as said another device designates, a rights management module for forwarding information of a corresponding right based on the identifier to the move management module, generating an RO for the right as much as said another device designates to forward the generated RO to the move management module, and removing information of transmitted right when a confirmation message is received from said another device; and a secure storage module for storing a right for use at the time of the content reproduction.

### BRIEF DESCRIPTION OF THE DRAWINGS

The above and other aspects, features and advantages of certain exemplary embodiments of the present invention will be more apparent from the following detailed description taken in conjunction with the accompanying drawings, in which:
FIG. 1 is a diagram illustrating a structure of a conventional domain in a DRM system;
FIG. 2 is a diagram illustrating how an RO is moved according to an exemplary embodiment of the present invention;
FIG. 3 is a diagram illustrating an internal construction of a device according to an exemplary embodiment of the present invention;
FIG. 4 is a flowchart illustrating an inter-device transmission/reception of a message for RO movement according to an exemplary embodiment of the present invention;
FIG. 5 is a flowchart illustrating an inter-device transmission/reception of a message through an RI according to an exemplary embodiment of the present invention;
FIG. 6 is a flowchart illustrating an inter-device transmission/reception of a message through an RI according to another exemplary embodiment of the present invention;
FIG. 7 is a flowchart illustrating an inter-device transmission/reception of a message through an RI according to yet another exemplary embodiment of the present invention;
FIG. 8 is a schematic diagram illustrating a procedure for generating an RO according to an exemplary embodiment of the present invention; and
FIG. 9 is a view illustrating a generated RO according to an exemplary embodiment of the present invention.

Throughout the drawings, it should be noted that like reference numbers are used to depict the same or similar elements, features and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness. For convenience, the present invention uses names of entities that Open Mobile Alliance (OMA), i.e. a standard organization of a device application has been defining. However, it goes without saying that the standards and names do not limit the scope of the present invention which can be applied to a system having similar technical background.

The present invention provides a method for giving and taking an RO between devices in an environment to which a DRM is applied. To this end, exemplary embodiments of the present invention provide two methods, which include a method for directly providing an RO between devices, and a method for providing an RO based on a network server, such as an RI. Therefore, since the RO can be mutually given and taken between devices, it is possible to freely reproduce a content between multiple devices.

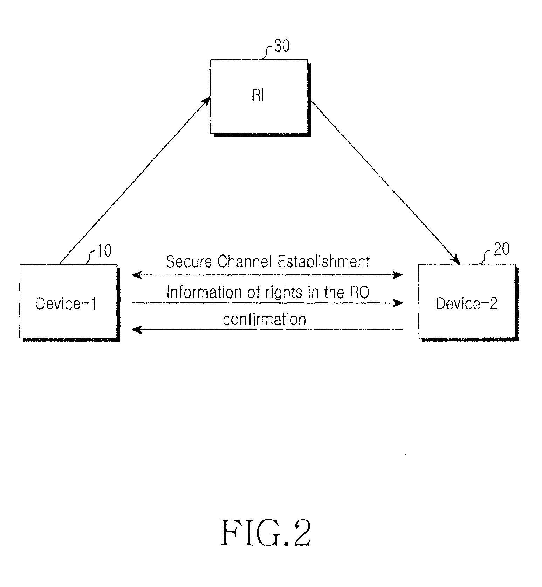

The methods will be described with reference to FIG. 2. The methods include a method for directly providing an RO between devices having the above-described function, and a method for providing an RO to another device through an RI. FIG. 2 is a diagram illustrating how the RO is moved according to an exemplary embodiment of the present invention.

FIG. 2 shows a flowchart of a message for the RO provision, which is proposed based on a basic structure that an OMA DLDRM Sub-Working Group (SWG) has been discussing.

First, in order to directly give and take an RO between devices, mutual authentication must be performed between the devices. A secure channel is established between a device-1 10 and a device-2 20 through such mutual authentication. If the secure channel is established through the mutual authentication, the device-1 10 can separate information of the right from an RO for its own content and transmit an RO for the separated right to the device-2 20. The device-2 20 transmits a confirmation message after receiving the RO for the separated right, so that the device-2 20 can use the RO transferred from the device-1 10.

FIG. 2 also shows a method for transferring an RO from the device-1 10 to the device-2 20 through the RI 30. In order to give and take the RO between the device-1 10 and the device-2 20, mutual authentication must be performed. According to a relay scheme through the RI, the RI 30 authenticates each of the device-1 10 and the device-2 20, and forwards the RO from the device-1 10 to the device-2 20 after the mutual authentication. Through the above-described methods, which include a direct transmission method and a relay transmission method through the RI, it is possible to mutually give and take the RO between devices, that is, the RO can be transferred from the device-1 10 to the device-2 20 or the RO can be transferred from the device-2 20 to the device-1 10.

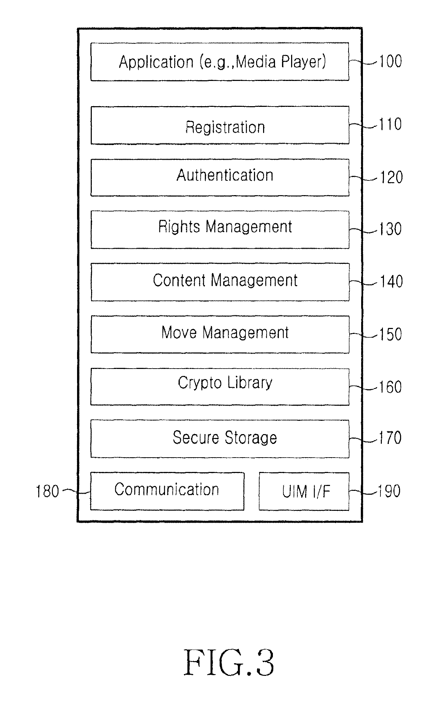

Hereinafter, a construction and an operation of a device having the above-described functions will be described with reference to FIG. 3. FIG. 3 is a v diagram illustrating an internal construction of the device-1 10 and the device-2 20 according to an exemplary embodiment of the present invention. Referring to FIG. 3, the device-1 10 includes an application module 100, a registration module 110, an authentication module 120, a rights management module 130, a content management module 140, a move management module 150, a crypto library module 160, a secure storage module 170, a communication module 180, and a User Identity Module InterFace (UIM I/F) module 190.

In an exemplary implementation, the application module 100 includes a module as a media player for receiving a decrypted content and reproducing the received content.

The registration module 110 performs resignation, service subscription, content usage management and the like. That is, the registration module 110 performs an operation according to the registration of a device and a service provider. The authentication module 120 manages authentication protocol execution of a UIM, such as a smart card including the user's identity, with a network, and generates and verifies a message by using its sub-module. The rights management module 130 manages the reproduction of the content according to a right within the device. The content management module 140 performs secure decryption of the content and interpretation of the content. The move management module 150 manages an RO to be moved to a counterpart device.

The modules 100 to 150 interwork with the crypto library module 160 and perform encryption, decryption, electronic signature, etc. The secure storage module 170 stores an encryption key, and the UIM IF module 190 communicates with a user identification module. The communication module 180 transmits and receives data through a network. In particular, the communication module 180 receives a message from a network, and transmits a response message with respect to the received message.

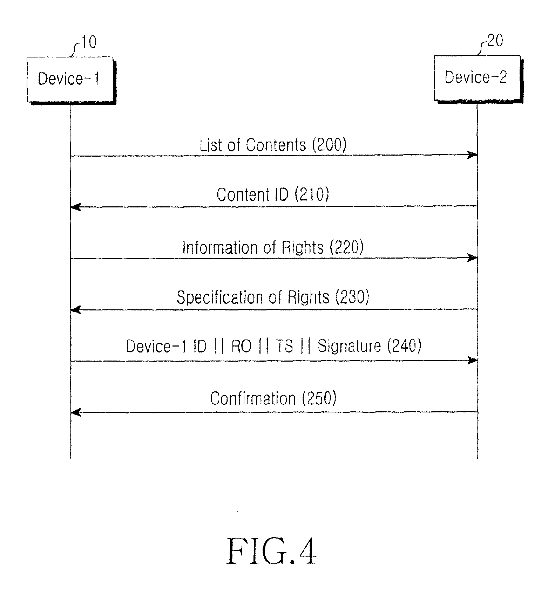

Hereinafter, the process of message transmission and reception between devices for RO movement according to an exemplary embodiment of the present invention will be described with reference to FIG. 4. FIG. 4 illustrates a method of direct RO movement between the device-1 10 and the device-2 20. In particular, an example of transferring an RO from the device-1 10 to the device-2 20 will be described.

In step 200, the device-1 10 transmits a list of contents for an RO to be transmitted to the device-2 20. For example, the device-1 10 transmits the names of content for a right to be transferred, to the device-2 20.

Then, a user selects and designates desired contents to be received in the device-2 20 from the list of contents. In step 210, the device-2 20 transmits an identifier (ID) for the designated content to the device- 1 10. The above-described operations are performed in each move management module 150 constructed within the device-1 10 and the device-2 20.

The device-1 10 receives the content ID designated by the device-2 20, thereby recognizing which content right to transfer. In step 220, the device-1 10 loads information of the right associated with the designated content into a message, and transmits the message to the device-2 20. Herein, the information of the right denotes information of the right included in the RO. For example, the device-1 10 transmits information, indicating that the device-1 10 possesses a right capable of playing an MP3 file ten times, to the device-2 20. In this case, the move management module 150 of the device-1 10 receives information of the corresponding right from the rights management module 130, generates the received information into a message constructed in the format as shown in Table 1 below, and forwards the generated message to the device-2 20.

**Table 1**

| | |
|---|---|
| Permission X1 | Constraint Y1 |
| Permission X2 | Constraint Y2 |
| ................ | ............... |

In Table 1, "permission" indicates a class of a usage right for a content and "constraint" indicates the amount of a right based on the usage right. A typical example of the permission includes "play" allowing the reproduction of the content, and "print" allowing printing of the content. A typical example of the constraint includes "count" indicating the number of usage permission, and "start time/end time" indicating time allowed for use of the content.

When the device-2 20 receives the message constructed in the format as shown in Table 1, the device-2 20 transmits specified right information on a desired part selected by the user from among the entire right information to the device-1 10 in step 230. For example, when the device-1 10 transmits information, indicating that the device-1 10 possesses the right capable of playing a specific MP3 file ten times, to the device-2 20 in step 220, the device-2 20 may transmit a message, which indicates that the device-2 20 wants to obtain a right capable of playing the MP3 file five times from among the right capable of playing the MP3 files ten times, to the device-1 10 in step 230. In this case, the device-2 20 appoints a value, indicating the amount of the right the device-2 20 wants to receive, to a corresponding constraint of each permission and transmits the message including the appointed value. The response message transmitted from the device-2 20 to the device-1 10 as described above is constructed in the format as shown in Table 2 below.

**Table 2**

| | |
|---|---|
| Permission X1 | Constraint Y11 |
| Permission X2 | Constraint Y21 |
| .................. | ........................ |

Table 2 shows a case where a right as much as a constraint Y 11 is set for the permission X1, and a right as much as a constraint Y21 is set for the permission X2. That is, the Y11 and the Y21 are values appointed by the device-2 20. As described above, the device-2 20 can appoint a right as much as the device-2 20 wants at the constraints according to a class of a usage right for a content.

In step 240, the device-1 10 generates a right as much as the device-2 20 designates in the form of an RO message, and transmits the generated message to the device-2 20. The message format forwarded to the device-2 20 includes each field of Deviee-1 ID (i.e. identity information of the device-1 10), an RO containing a right, a TS (i.e. time stamp), and an electric signature. That is, when the rights management module 130 of the device-1 10 generates as much RO as the device-2 20 designates and forwards the generated RO to the move management module 150, the move management module 150 forwards the RO to the device-2 20 in the format of the message.

After receiving the message, the device-2 20 transmits a reception confirmation message to the device-1 10 in step 250. Then, the rights management module 130 of the device-1 10 removes a permission and a constraint of the transferred right from its own right. That is, the device-1 10 removes a permission and a constraint representing a right transferred to the device-2 20. For example, if the device-1 10 transfers the right capable of playing a specific MP3 file five times to the device-2 20, the device-1 10 removes the transferred right capable of playing a file five times from among its own right (i.e. an entire right) capable of playing a file ten times.

Hereinafter, a method for giving and taking an RO between the device-1 10 and the device-2 20 through the RI relay will be described. Exemplary embodiments of the present invention will be separately described as follows. An exemplary embodiment of the present invention deals with a method for right transmission from the device-1 10 to the device-2 20 through the RI, another exemplary embodiment of the present invention deals with a method for right transmission through the RI based on the OMA DRM v2.0, and yet another exemplary embodiment of the present invention deals with a method by which the device-2 20 receives the RO from the device-1 10 based on a message that the device-1 10 transmits to the RI.

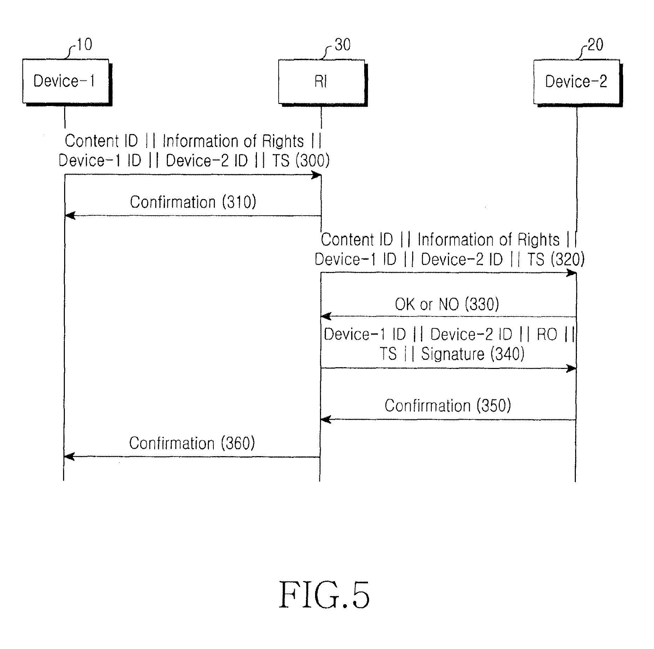

FIG. 5 is a flowchart of an inter-device transmission/reception of a message through the RI according to an exemplary embodiment of the present invention.

Referring to FIG. 5, in step 300, the device-1 10 transmits a message to the RI 30, the message including an ID of a content to be transmitted to the device-2 20, information of a right, an ID of the device-1 10 (i.e. a transmitter), an ID of the device-2 20 (i.e. a receiver), and a TS. In this case, the move management module 150 of the device-1 10 obtains information of the corresponding right through the rights management module 130. The above-described information of the right is constructed to have the same format as shown in Table 1.

As such, if the device-1 10 transmits information of a right in the form of a message, the RI 30 transmits a confirmation message with respect to the received message to the device-1 10 in step 3 10. In step 320, the RI 30 forwards the message from the device-1 10 to the device-2 20.

If the device-2 20 receives the message, the device-2 20 notifies a user that the message is received. In step 330, the device-2 20 transmits a message indicating which content right to take. Herein, the right is designated according to the user selection. In this case, according to the user selection, the move management module 150 within the device-2 20 transmits a response message indicating approval or disapproval for the right. If the device-2 20 transmits a response message indicating disapproval for the right to the RI 30 (e.g. "No"), the RI 30 determines that the device-2 20 denies the reception of the right, and thus terminates the processes according to a current protocol.

In contrast, if the RI 30 receives a response message indicating approval for the right from the device-2 20 (e.g. "Ok"), the RI 30 generates an RO based on the information of the right received from the device-1 10. In step 340, the RI 30 forwards information including the generated RO, an ID of the device-1 10, an ID of the device-2 20, a TS, and data obtained by adding its own electric signature for such information, to the device-2 20. The move management module 150 of the device-2 20 receives the message having the format as described above, and the move management module 150 forwards the RO included in the received message to the rights management module 130. Therefore, the device-2 20 stores the RO transferred from the device-1 10 in the secure storage module 170 so as to use the stored RO at the time of content reproduction.

In step 350, the move management module 150 of the device-2 20 transmits a confirmation message, indicating that the right has been safely received, to the RI 30. In step 360, the RI 30 transmits the confirmation message to the device-1 10. Then, the rights management module 130 of the device-1 10 removes a permission and a constraint indicating the right transferred from its own right.

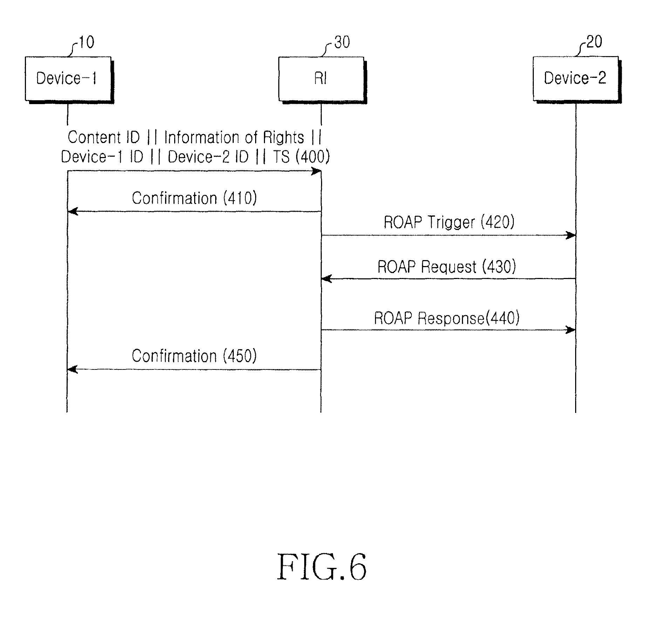

FIG. 6 is a flowchart illustrating an inter-device transmission/reception of a message through an RI according to another exemplary embodiment of the present invention.

Since steps 400 and 410 of FIG. 6 are identical with steps 300 and 310 of FIG. 5, a detailed description thereof will be omitted. If the RI 30 obtains information of a right from the device-1 10 through steps 400 and 410, the RI 30 transmits an ROAP Trigger message, requiring the reception of an RO from the device-1 10, to the device-2 20 based on the OMA DRM v2.0 in step 420. That is, the ROAP Trigger message functions to make the device-2 20 begin to acquire the RO of the device-1 10.

In step 430, the device-2 20 having the received ROAP Trigger message recognizes that the device-2 20 must bring the RO from the RI 30, and thus transmits an RO request message to the RI 30 based on OMA RM v2.0. In step 440, the RI 30 generates an RO based on the preliminarily received information of the right, and forwards the generated RO to the device-2 20 by using the RO response message in the OMA DRM v2.0. In step 450, the RI 30 transmits a confirmation message, indicating that the RI 30 has transferred the RO to the device-2 20, to the device-1 10. Therefore, the device-1 10 removes a permission and a constraint indicating the right transferred from among its own right.

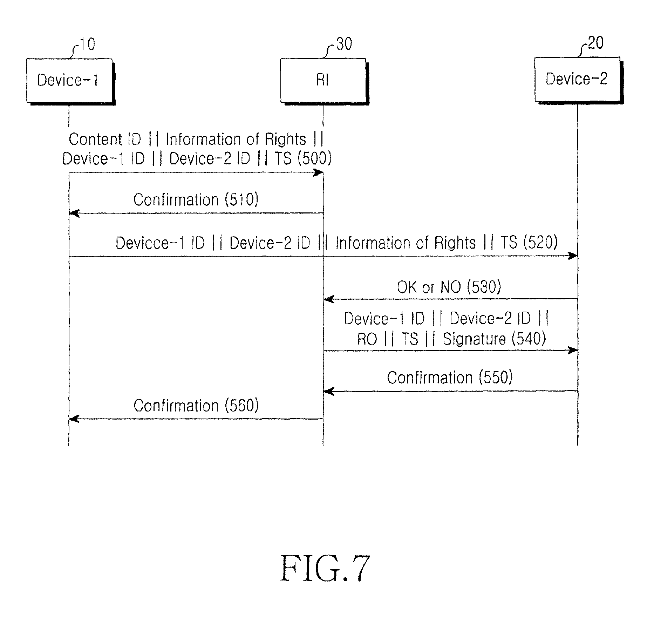

Hereinafter, according to yet another exemplary embodiment of the present invention, a method by which the device-2 20 receives the RO through the RI based on the message transmitted by the device-1 10 will be described with reference to FIG. 7.

FIG. 7 is a flowchart illustrating an inter-device transmission/reception of a message through the RI according to another exemplary embodiment of the present invention. Unlike the above-described exemplary embodiments, the exemplary embodiment illustrated in FIG. 7 deals with a process by which the device-2 20 receives the RO from the device-1 10 based on the message transmitted by the device-1 10.

Referring to FIG. 7, since steps 500 and 510 of FIG. 7 are identical with steps 300 and 310 of FIG. 5, a detailed description thereof will be omitted. The RI 30 performs authentication in transmitting the information of the right from the device-1 10 to the device-2 20 through steps 500 and 510. When the device-1 10 successfully performs the authentication and receives the confirmation message from the RI 30, the device-1 10 directly transmits the information of the right together with the message to the device-2 20 in step 520. Herein, the information of the right is to be transferred, and the message includes an ID of the device-1 10, an ID of the device-2 20 (i.e. a receiver), and a TS. In this case, the information of the right is constructed in the format as shown in Table 1 above.

When the device-2 20 receives the message, the device-2 20 notifies a user that the message is received. In step 530, the device-2 20 transmits the message, indicating which content right to take. Herein, the right is designated according to the user's selection. In this case, the move management module 150 within the device-2 20 transmits a response message indicating approval or disapproval for the right according to the user selection. If the device-2 20 transmits a response message, indicating disapproval for the right (e.g. "No"), to the RI 30, the RI 30 determines that the device-2 20 denies the reception of the right, and thus terminates the processes based on a current protocol.

In contrast, if the device-2 20 transmits a response message indicating approval for the right (e.g. "Ok"), the RI 30 performs steps 540 to 560 similar to steps 340 to 360 of FIG. 5. Therefore, it is possible to give and take a right between the device-1 10 and the device-2 20. When one user uses a plurality of devices, it is possible to share a right among them. It is also possible to conveniently reproduce a content at any time, even though any device may be used.

In the above exemplary embodiments, one device separates a partial RO from an entire RO and then provides the separated partial RO to another device. However, according to another exemplary embodiment, the entire RO may include a separate transferable RO, so that the separate RO can be provided to another device.

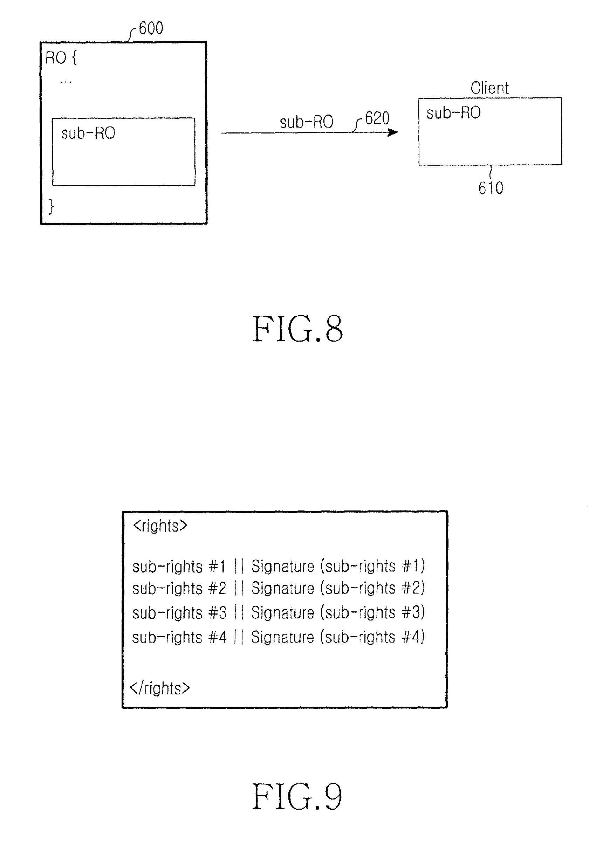

FIG. 8 is a schematic block diagram illustrating a procedure of generating the RO according to an exemplary embodiment of the present invention. In particular, FIG. 8 shows a method for generating a separate RO. Referring to FIG. 8, a device corresponding to a host 600 includes a separate sub-RO within the entire RO, so that it is possible to separate only the sub-RO from the entire RO and provide the sub-RO to another device, such as a client device 610, as indicated by reference numeral 620 in FIG. 8.

FIG. 8 shows an entire RO including one sub-RO. However, the entire RO may include multiple sub-ROs as illustrated in FIG. 9. Therefore, when multiple sub-ROs are within the entire RO, it is also possible to transmit each of the sub-ROs to different devices.

Exemplary embodiments of the present invention provide a method for giving and taking an RO between different devices, so that it is possible to freely reproduce a content among a plurality of devices based on the RO.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for transmitting and receiving a Rights Object (RO) for a content between one or more devices, the method comprising:
transmitting, to at least one second device by a first device, a content list for a right to be transmitted;
receiving an identifier for a content designated according to an input from the second device;
transmitting, by the first device, information of the right for the designated content based on the received identifier; and
when the second device requests a quantity of the right, transmitting, by the first device, the requested quantity of the right to the second device.

2. The method as claimed in claim 1, wherein the information of the right comprises a permission indicating a class of a usage right for the content and a constraint indicating the amount of the right based on the class of the usage right.

3. The method as claimed in claim 2, wherein the requesting of the quantity of the right by the second device and the transmitting by the first device of the requested quantity of the right comprises:
designating, by the second device, the right to be received, based on the permission and the constraint, and transmitting the designated right; and
transmitting to the second device by the first device, the right as much as the second device designates with respect to the information reception of the designated right.

4. The method as claimed in claim 2, further comprising:
transmitting, by the second device, a confirmation message when receiving the requested quantity of the right; and
removing, by the first device, the permission and the constraint for transmitted right, when receiving the confirmation message.

5. The method as claimed in claim 3, further comprising:
transmitting, by the second device, a confirmation message when receiving the requested quantity of the right; and
removing, by the first device, the permission and the constraint for transmitted right, when receiving the confirmation message.

6. A method for transmitting and receiving a Rights Object (RO) for a content between devices in a system including one or more devices and a Rights Issuer (RI), the method comprising:
transmitting, to the RI by a first device, information of a right to be transmitted;
transmitting, to a second device, a message asking if the second device will receive the information of the right; and
transmitting the information of the right to the second device by the RI when receiving an approval in response to the asking message.

7. The method as claimed in claim 6, wherein the information of the right comprises a permission indicating a class of a usage right for the content and a constraint indicating the amount of the right based on the class of a usage right.

8. The method as claimed in claim 6, wherein the transmitting to the second device of the message asking if the second device will receive the information comprises transmitting by the RI.

9. The method as claimed in claim 6, wherein the transmitting to the second device of the message asking if the second device will receive the information comprises transmitting by the first device.

10. A method for transmitting and receiving a Rights Object (RO) for a content between devices in a system including one or more devices and a Rights Issuer (RI), the method comprising:
transmitting to the RI, by a first device, information of a right to be transmitted;
transmitting, to a second device by the RI, a message requiring start of a process of acquiring the information of the right from the first device; and
receiving, by the second device, the right from the RI when receiving the message.

11. A method for transmitting and receiving an RO for a content between devices in a system including one or more devices and an RI, the method comprising the steps of:
transmitting to the RI by a first device of the devices, information of a right to be transmitted;
transmitting to the second device by the first device, the information of the right to be transmitted, when receiving a confirmation message from the RI; and
transmitting, by the RI, the right to the second device, when an approval message is received from the second device.

12. A system for transmitting and receiving a Rights Object (RO) for a content between devices, the system comprising:
a first device for transmitting information of a right to be transmitted, to a Rights Issuer (RI);
the RI for transmitting a message, asking if a second device will receive the information of the right, to the second device when receiving the information of the right, and for transmitting the information of the right to the second device when receiving an approval message from the second device; and
the second device for transmitting a response message, indicating approval or disapproval, to the RI when receiving the message, asking if the second device will receive the information of the right, from the RI, and for receiving the right from the RI when transmitting an approval message indicating the reception of the information of the right.

13. The system as claimed in claim 12, wherein the RI transmits a message, requiring start of a process of acquiring the information of the right from the first device, to the second device when receiving the information of the right from the first device, and bringing the right from the RI when the second device receives the message requiring start of the process.

14. The system as claimed in claim 12, wherein the first device transmits the information of the right to be transmitted to the second device when the first device receives a confirmation message after transmitting the information of the right to be transmitted to the RI.

15. The system as claimed in claim 14, wherein the second device transmits a message, indicating approval or disapproval for the right, to the RI when receiving the information of the right to be transmitted from the first device.

16. An apparatus for transmitting and receiving a Rights Object (RO) for a content, the apparatus comprising:
a move management module for transmitting a content list for a right to be transmitted to another device, for transmitting information of the right for a corresponding content to said another device when an identifier for the content designated by said another device is received, and for transmitting a quantity of the right as said another device designates;
a rights management module for forwarding information of a corresponding right based on the identifier to the move management module, for generating an RO for the quantity of the right as said another device designates to forward the generated RO to the move management module, and for removing information of the transmitted right when a confirmation message is received from said another device; and
a secure storage module for storing a right for use at the time of the content reproduction.
